# EUROPÄISCHE PATENTSCHRIFT

(11) **EP 1 031 138 B1**
(45) Veröffentlichungstag und Bekanntmachung des Hinweises auf die Patenterteilung: **24.07.2002**
(21) Anmeldenummer: 98954351.7
(22) Anmeldetag: 06.10.1998
(51) Int. Cl.: G10L 13/08

(54) **VORRICHTUNG UND VERFAHREN ZUR SPRECHERUNABHÄNGIGEN SPRACHNAMENWAHL FÜR TELEKOMMUNIKATIONS-ENDEINRICHTUNGEN**
DEVICE AND METHODS FOR SPEAKER-INDEPENDENT SPOKEN NAME SELECTION FOR TELECOMMUNICATIONS TERMINALS
DISPOSITIF ET PROCEDE DE COMPOSITION PAR NOM A RECONNAISSANCE VOCALE INDEPENDAMMENT DE L'UTILISATEUR, POUR DES TERMINAUX DE TELECOMMUNICATION

(30) Priorität: 19.11.1997 DE 19751123
(43) Veröffentlichungstag der Anmeldung: 30.08.2000
(73) Patentinhaber: Deutsche Telekom AG, 53113 Bonn (DE)
(72) Erfinder: NAUMBURGER, Volkmar, D-15537 Erkner (DE)
(86) Internationale Anmeldenummer: EP9806343
(87) Internationale Veröffentlichungsnummer: WO9926232

(56) Entgegenhaltungen:
- EP-A- 0 141 289
- WO-A-87/04292
- WO-A-96/35207
- STEINBISS ET AL.: "Continuous speech dictation - From theory to practice" SPEECH COMMUNICATION, Bd. 17, Nr. 1, August 1995, Seiten 19-38, XP004062388

## Beschreibung

Die Erfindung betrifft eine Vorrichtung zur sprecherunabhängigen Sprachnamenwahl für Telekommunikations-Endeinrichtungen, bestehend aus einem Speicher für Rufnummern und Namen, in welchem Namen sowie jeweils die damit assoziierte Rufnummer als ASCII-Text hinterlegt sind, einem Graphem-Phonem-Umsetzer zur Erstellung eines digitalen Wortmodells (Phonemkette) aus einem ASCII-Text (Graphemkette), einem phonembasierten Spracherkenner zum Vergleichen eines gesprochenen, digitalisierten Sprachsignals mit vorbestimmten digitalen Wortmodellen, deren ASCII-Entsprechung bekannt ist und Bestimmen desjenigen Wortmodells, welches die größte Übereinstimmung mit dem Sprachsignal aufweist, wobei der Speicher durch alphanumerische Eingabe von benutzerdefinierten Namen und assoziierten Rufnummern belegbar ist und der Graphem-Phonem-Umsetzer aus dem eingegebenen Namen ein entsprechendes digitales Wortmodell erstellt, welches zusammen mit dem ASCII-Text oder einem diesem zugeordneten Kode derart gespeichert wird, daß der Spracherkenner darauf zugreifen kann, wobei zur automatischen Sprachnamenwahl ein akustisch eingegebener Name als digitales Sprachsignal dem Spracherkenner übermittelt und von diesem mit vorbestimmten Wortmodellen verglichen wird, und der Spracherkenner dem Wortmodell, das mit dem Sprachsignal die größte Übereinstimmung aufweist, entsprechende ASCII-Text oder den diesem zugeordneten Kode ermittelt, welcher zum Abruf der assoziierten Rufnummer aus dem Speicher dient, wobei durch die Sprech- und Wähleinrichtung der Endeinrichtung automatisch eine Telekommunikationsverbindung mit dieser Rufnummer aufgebaut wird, gemäß dem Oberbegriff des Anspruchs 1 sowie ein Verfahren zur Einrichtung eines individuellen Rufnummernverzeichnisses zur sprecherunabhängigen Sprachnamenwahl für Telekom-Endeinrichtungen gemäß dem Oberbegriff des Anspruchs 4.

Es sind Telefone mit Sprachnamenwahl bekannt, bei welchen durch akustische Eingabe des Namens eines Netzteilnehmers automatisch eine Kommunikationsverbindung mit der diesem Namen zugeordneten Rufnummer eingeleitet wird, indem diese Rufnummer automatisch angewählt wird. Bekannte Telefone mit Sprachnamenwahl benutzen die dem Stand der Technik entsprechende sprecherabhängige Namenwahl unter Verwendung sprecherabhängiger Spracherkenner. Die Verwendung sprecherabhängiger Spracherkenner setzt voraus, daß die Namen, die per Namenwahl aktiviert werden sollen, in einer vorgeschalteten Trainingsprozedur durch mehrfaches Vorsprechen angelernt worden sind.

Zweckmäßigerweise werden bei der Durchführung dieser Trainingsprozedur die zu den Namen assoziierten Rufnummer mit eingegeben und in einem individuellen Namens- und Rufnummernverzeichnis abgelegt. Die Namen werden in der Einlernphase durch den Nutzer akustisch eingegeben und als digitalisiertes Sprachsignal gespeichert, wobei im der Anwendungsfall gesprochene Name mit diesen hinterlegten Namensmustern verglichen wird und bei Übereinstimmung die dem erkannten Namensmuster zugeordnete Rufnummer angewählt wird. Für nicht mit den Erfordernissen der sprecherabhängigen Spracherkennung vertrauten Nutzern stellt die Trainingsphase allerdings eine hohe interlektuelle Anforderung dar. Daher werden Telefone, die mit diesem Komfortmerkmal ausgestattet sind, oftmals falsch bedient.

Die Verwendung eines sprecherabhängigen Spracherkenners führt auch bei korrekt durchgeführter Einlernphase dazu, daß die Namensmuster meist nur dann gut wiedererkannt werden, wenn die Person, die das Training durchgeführt hat, auch der spätere Nutzer des Telefons ist. Dadurch kann nur die trainierende Person das so angelegte Namensverzeichnis und damit die automatische Sprachnamenwahl optimal nutzen. Andere Personen mit anderem individuellem Sprachverhalten werden deutlich schlechter erkannt.

Durch die WO 96/35207 ist eine Vorrichtung zur sprecherunabhängigen Sprachnamenwahl für Telekommunikations-Endeinrichtungen der eingangs genannten Gattung bekannt geworden. Diese weist einen Speicher für Rufnummern und Namen auf, in dem Namen sowie jeweils die damit assoziierte Rufnummer als ASCII-Text hinterlegt sind, einen Graphem-Phonem-Umsetzer sowie einen phonembasierten Spracherkenner zum Vergleichen eines gesprochenen, digitalisierten Sprachsignals mit vorbestimmten digitalen Wortmodellen. Der Graphem-Phonem-Umsetzer erstellt aus dem Namen ein entsprechendes digitales Wortmodell, welches als digitales Sprachsignal dem Spracherkenner übermittelt und von diesem mit vorbestimmten Wortmodellen verglichen wird. Bei Übereinstimmung wird durch die Sprech- und Wähleinrichtung der Endeinrichtung automatisch eine Telekommunikationsverbindung mit dieser Rufnummer aufgebaut.

Der Erfindung liegt die Aufgabe zugrunde, die Sprachnamenwahl bei Telekommunikations-Endeinrichtungen derart zu verbessern, daß ein einfaches Anlegen des individuellen Namens- und Rufnummernverzeichnisses sowie im Anwendungsfall eine weitgehend sprecherunabhängige Erkennung automatisch anzuwählender Namen möglich ist.

Die Aufgabe wird bei einer Vorrichtung der eingangs genannten Gattung dadurch gelöst, dass die Graphem-Phonem-Umsetzung durch ein Ausnahme-Lexikon unterstützt wird, in welchem phonetischen Eigenarten von Eigennamen entsprechende Sequenzen hinterlegt sind, welche durch den Graphem-Phonem-Umsetzer (8) in die Phonemkette eingefügt werden.

Verfahrensmäßig ist die Lösung der Aufgabe, ein Verfahren des Oberbegriffs des Anspruchs 4 weiterzuentwickeln, dadurch gekennzeichnet, dass das einem Namen zugeordnete Wortmodell (Phonemkette) aus einer Datenbank, in welcher Eigennamen entsprechenden Phoneme bzw- Phonemketten hinterlegt sind, ermittelt wird.

Dank des Einsatzes phonembasierter sprecherunabhängiger Spracherkenner kann ein wie auch immer geartetes Training ganz entfallen. Das Einrichten des Namens- und Rufnummernverzeichnisses wird reduziert auf die bekannte Eingabe der Rufnummer und des Namens in orthografischer Weise über die Tastatur des Endgerätes. Die eingegebenen Informationen bzw. Buchstaben werden mittels des Graphem-Phonem-Umsetzers in sprachlich abrufbare und hörbare Einheiten bzw. Lautzeichen (Phoneme) umgewandelt und aus einer Graphemkette oder -folge, also einem aus Buchstaben gebildeten Wort, eine Phonemkette oder -folge aus einer Mehrzahl von Lautzeichen gebildet. Damit werden den eingegebenen Namen entsprechende standardisierte Wortmodelle gebildet, welche durch die Zusammensetzung aus Standard-Lauten (Phonemen) aus einer Datenbasis unabhängig von der Person ist, welche das Rufnummernverzeichnis einrichtet. Damit können im Anwendungsfall Spracheingaben dieser Person wie auch jedes weiteren Nutzer mit etwa gleicher Wahrscheinlichkeit erkannt werden.

Da es häufig verschiedene Möglichkeiten gibt, einen geschriebenen Text in Laute umzusetzen, wird das vom Graphem-Phonem-Umsetzer aufgrund der Texteingabe erstellte Wortmodell vor der entgültigen Speicherung dem Benutzer als synthetisches Sprachsignal über einen Lautsprecher vorgespielt. Der Benutzer kann dann prüfen, ob das berechnete Wortmodell die korrekte Wiedergabe des Namens ist und gegebenenfalls eine alternative Lautumsetzung veranlassen.

Erfindungsgemäß wird die Graphem-Phonem-Umsetzung durch ein Ausnahme-Lexikon unterstützt, in welchem phonetischen Eigenarten von Eigennamen entsprechende Sequenzen hinterlegt sind, welche durch den Graphem-Phonem-Umsetzer in die Phonemkette eingefügt werden. Damit können auch die bei Eigennamen häufig auftretenden Abweichungen von der üblichen Schrift-Laut-Umsetzung bei der Berechnung der Phonemkette berücksichtigt werden, wodurch die spätere Erkennung des Eigennamens erleichtert wird. Weiterhin wird die Graphem-Phonem-Umsetzung vorteilhaft durch eine Onomastika-Datenbank unterstützt, in welcher Eigennamen als ASCII-Text sowie als digitales Wortmodell gespeichert sind. Bei Eingabe des Namens als Text wird zunächst geprüft, ob dieser Name in der Datenbank vorhanden ist und gegebenenfalls ihm die dort hinterlegte Phonemkette zugewiesen. Andernfalls wird die buchstabengemäße Umwandlung in eine Phonemkette vorgenommen, eventuell unter Zuhilfenahme des Ausnahme-Lexikons.

Innerhalb der Vorrichtung wird der eingegebene Name, das diesem entsprechende durch die Vorrichtung bestimmte Wortmodell sowie die zum Namen eingegebene Rufnummer derart abgelegt, daß stets eine Zuordnung dieser Daten zueinander getroffen werden kann, z.B. indem ein Datensatz mit einer Kodeziffer versehen wird. In diesem Fall kann die Hinterlegung des Namensmusters bzw. Wortmodells auch getrennt von Name und Rufnummer erfolgen, z.B. innerhalb des Spracherkenners.

Das vom Benutzer der Vorrichtung eingegebene Sprachsignal ist derjenige Name eines Telefonnetzteilnehmers, dessen in der Einlernphase eingegebene Rufnummer durch die Vorrichtung automatisch angewählt werden soll. Das Sprachsignal wird digitalisiert und dem Spracherkenner übermittelt der einen Vergleich mit vorbestimmten digitalen Wortmodellen, die in der Einlernphase mittels des Graphem-Phonem-Umsetzers erstellt wurden, durchführt. Dasjenige Wortmodell, das die größte Übereinstimmung mit dem eingegebenen Sprachsignal aufweist, ist das Erkennungsergebnis des Spracherkenners. Weisen sämtliche hinterlegten Namensmuster zu große Abweichungen vom eingegebenen Sprachsignal auf und ist somit eine Identifizierung des Namens nicht möglich, so gibt die Vorrichtung eine Fehlermeldung aus und fordert vorzugsweise zur erneuten akustischen Eingabe des Namens auf.

Dadurch daß die Erstellung der Phonemkette bzw. des Wortmodells auf standardisierten Lauten basiert, wird eine vom individuellen Sprachverhalten unabhängige Referenz geschaffen, wobei das im Anwendungsfall von einem Benutzer gesprochene Wort durch Vergleich mit den vorhandenen Referenzobjekten, den vorbestimmten Wortmodellen, ermittelt wird. Somit gelingt im Gegensatz zur sprecherabhängigen Spracherkennung, bei der die durch individuelles Training geschaffenen Wortmodelle lediglich eine subjektive Referenz darstellen, eine weitgehend sprecherunabhängige Zuordnung des gesprochenen Worts zu dem vorbestimmten Wortmodell und zur damit assoziierten Rufnummer. Die Erkennungssicherheit ist für alle Nutzer der erfindungsgemäßen Vorrichtung etwa gleich.

Wurde ein Name erkannt, indem eine weitgehende Übereinstimmung zwischen dem eingegebenen Sprachsignal und dem hinterlegten Wortmodell festgestellt wurde, wird vorzugsweise der dem Wortmodell entsprechende Name als Text auf einem Display dargestellt oder das Wortmodell als synthetische Sprache über einen Lautsprecher wiedergegeben. Nach Bestätigung des Erkennungsergebnisses durch den Nutzer wird die automatische Wahl mit der Wortmodell und Namen zugeordneten Rufnummer durchgeführt.

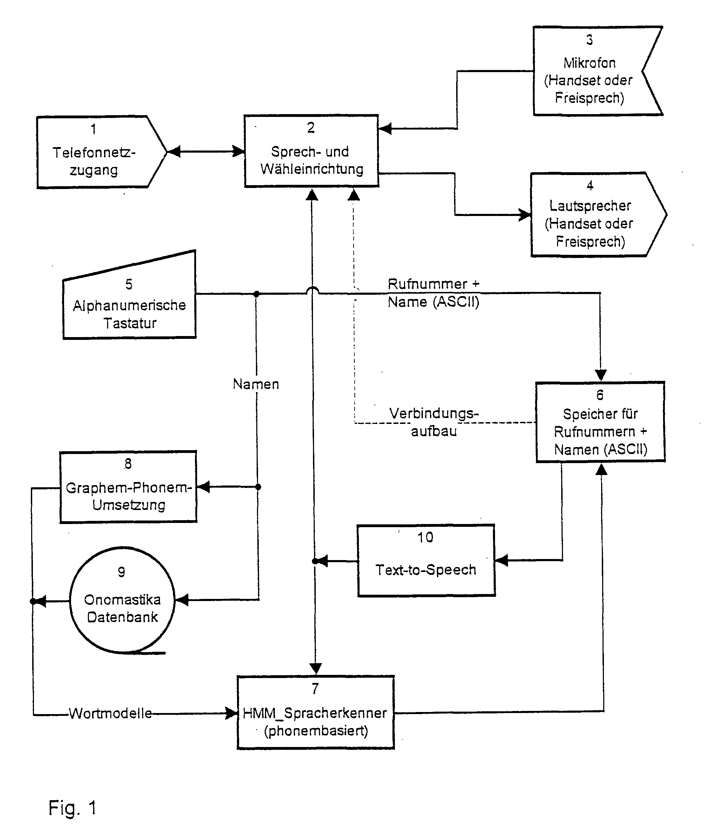

Die Erfindung wird nachfolgend an einem Ausführungsbeispiel erläutert. Figur 1 zeigt ein Blockdiagramm einer erfindungsgemäßen Vorrichtung zur sprecherunabhängigen Sprachnamenwahl. Der Datentransfer und dessen Richtung zwischen den einzelnen dargestellten Komponenten ist durch Pfeile angedeutet.

Die Vorrichtung weist die bekannten Komponenten einer Telekommunikations-Endeinrichtung auf, das sind der Telefonnetzzugang 1, die Sprech- und Wähleinrichtung 2 und ein Mikrofon 3 sowie einen Lautsprecher 4 zur Spracheingabe bzw. Sprachwiedergabe über einen Telefonhörer oder innerhalb einer Freisprecheinrichtung. Das Telefon weist weiterhin eine Tastatur 5 zur Eingabe von Wählbefehlen sowie ein Display zur Anzeige von Informationen auf.

Das Telefon mit sprecherunabhängiger Sprachnamenwahl weist einen Speicher 6 für Rufnummern und Namen im ASCII-Format, einen Graphem-Phonem-Umsetzer 8 sowie einen phonembasierten HMM-Spracherkenner auf.

Die Vorrichtung wird in zwei Phasen angewendet. In der ersten Phase, der Einlernphase, erfolgt die Eingabe der Rufnummer und des assoziierten Namens über die alpha-numerische Tastatur 5 in den Speicher 6 des Endgerätes. Nach jeder Eingabe eines neu hinzugekommenen Namens wird aus dem im Speicher 6 abgelegen Namen durch den Graphem-Phonem-Umsetzer 8 ein neues Wortmodell für den HMM-Spracherkenner 7 berechnet. Zur Unterstützung der Umsetzung von Eigennamen in eine Phonemkette wird ein Ausnahme-Lexikon zur Graphem-Phonem-Umsetzung zuhilfe genommen. Bei der Vorrichtung wird hierfür eine Onomastika-Datenbank 9 verwendet, die die meisten vorkommenden Eigennamen einer Sprache beinhaltet. Mit der Berechnung der Wortmodelle zu allen eingegebenen Namen durch den Graphem-Phonem-Umsetzer 8 und gegebenenfalls deren Bestätigung durch den Benutzer nach Wiedergabe als synthetische Sprache mittels einer Text-to-Speech-Einheit 11 über die Sprechund Wähleinrichtung 2 sowie den Lautsprecher 4 ist die e Einlernphase abgeschlossen. Das damit angelegte Rufnummernverzeichnis kann jedoch jederzeit durch erneute Eingabe von Name und Rufnummer erweitert werden.

In der zweiten Phase wird die Sprachnamenwahl benutzt, um eine Verbindung zu einem gewünschten Teilnehmer aufzubauen. Zu diesem Zweck spricht der Nutzer den Namen des gewünschten Teilnehmers entweder über das Mikrofon 3 des Handsets oder der Freisprecheinrichtung in die Endeinrichtung. Das Sprachsignal wird über die Sprech- und Wähleinrichtung 2 an den HMM-Spracherkenner 7 weitergeleitet. Der Spracherkenner 7 erkennt durch Vergleich mit den vorbestimmten Wortmodellen den wahrscheinlichesten Namen des Wortmodells und liefert das Erkennungsergebnis an den Speicher für Rufnummern und Namen 6. Über die Zuordnung des Namens zur Rufnummer kann nunmehr über die Sprech- und Wähleinrichtung 2 der Verbindungsaufbau über den Netzzugang 1 vorgenommen werden. Es ist vorgesehen, daß der erkannte Name zur Bestätigung in seiner ASCII-Darstellung auf dem Display 10 dargestellt oder als synthetisches Sprachsignal akustisch über den Lautsprecher des Handsets oder der Freisprecheinrichtung 4 wiedergegeben wird. Dazu wird der erkannte Name in seiner ASCII-Darstellung einem Text-to-Speech-Synthetisator 11 zur Erzeugung eines synthetischen Sprachsignals zugeführt oder die synthetische Sprache durch akustische Wiedergabe des erkannten Wortmodells erzeugt.

Da der Graphem-Phonem-Umsetzer 8 und der Text-to-Speech-Synthetisator 11 gleichermaßen auf eine Datenbasis zur Graphem-Phonem-Umsetzung zugreifen, kann diese Ressource gemeinsam genutzt werden.

### Liste der Bezugszeichen:

- 1: Telefonnetzzugang
- 2: Sprech- und Wähleinrichtung
- 3: Mikrofon
- 4: Lautsprecher
- 5: alphanumerische Tastatur
- 6: Speicher für Rufnummern und Namen
- 7: phonembasierter Spracherkenner
- 8: Graphem-Phonem-Umsetzer
- 9: Onomastika-Datenbank
- 10: Display
- 11: Text-to-Speech-Synthetisator

## Patentansprüche

1. Vorrichtung zur sprecherunabhängigen Sprachnamenwahl für Telekommunikations-Endeinrichtungen, bestehend aus einem Speicher (6) für Rufnummern und Namen, in welchem Namen sowie jeweils die damit assoziierte Rufnummer als ASCII-Text hinterlegt sind, einem Graphem-Phonem-Umsetzer (8) zur Erstellung eines digitalen Wortmodells (Phonemkette) aus einem ASCII-Text (Graphemkette), einem phonembasierten Spracherkenner (7) zum Vergleichen eines gesprochenen, digitalisierten Sprachsignals mit vorbestimmten digitalen Wortmodellen, deren ASCII-Entsprechung bekannt ist und Bestimmen desjenigen Wortmodells, welches die größte Übereinstimmung mit dem Sprachsignal aufweist, wobei der Speicher (6) durch alphanumerische Eingabe von benutzerdefinierten Namen und assoziierten Rufnummern belegbar ist und der Graphem-Phonem-Umsetzer (8) aus dem eingegebenen Namen ein entsprechendes digitales Wortmodell erstellt, welches zusammen mit dem ASCII-Text oder einem diesem zugeordneten Kode derart gespeichert wird, daß der Spracherkenner (7) darauf zugreifen kann, wobei zur automatischen Sprachnamenwahl ein akustisch eingegebener Name als digitales Sprachsignal dem Spracherkenner (7) übermittelt und von diesem mit vorbestimmten Wortmodellen verglichen wird, und der Spracherkenner (7) dem Wortmodell, das mit dem Sprachsignal die größte Übereinstimmung aufweist, den entsprechenden ASCII-Text oder den diesem zugeordneten Kode ermittelt, welcher zum Abruf der assoziierten Rufnummer aus dem Speicher (6) dient, wobei durch die Sprechund Wähleinrichtung (2) der Endeinrichtung automatisch eine Telekommunikationsverbindung mit dieser Rufnummer aufgebaut wird,
**dadurch gekennzeichnet,**
**dass** die Graphem-Phonem-Umsetzung durch ein Ausnahme-Lexikon unterstützt wird, in welchem phonetischen Eigenarten von Eigennamen entsprechende Sequenzen hinterlegt sind, welche durch den Graphem-Phonem-Umsetzer (8) in die Phonemkette eingefügt werden.

2. Vorrichtung nach Anspruch 1, **dadurch gekennzeichnet,**
**daß** die Graphem-Phonem-Umsetzung durch eine Onomastika-Datenbank unterstützt wird, in welcher Eigennamen als ASCII-Text sowie als digitales Wortmodell gespeichert sind.

3. Vorrichtung nach Anspruch 1 oder 2, **dadurch gekennzeichnet,**
**daß** das digitale Wortmodell, bei dem der Spracherkenner (7) die größte Übereinstimmung mit einem als Sprachsignal eingegebenen Namen feststellt, mittels eines Sprachsynthetisators (11) akustisch wiedergegeben wird, bevor der automatische Verbindungsaufbau eingeleitet wird und erst nach Bestätigung des Erkennungsergebnisses der automatische Verbindungsaufbau mit der dem erkannten Namen entsprechenden Rufnummer ausgeführt wird.

4. Verfahren zur Einrichtung eines individuellen Rufnummernverzeichnisses zur sprecherunabhängigen Sprachnamenwahl für Telekom-Endeinrichtungen, mit alphanumerischer Eingabe eines oder mehrerer Namen und assoziierter Rufnummern, Speicherung der eingegebenen Daten im ASCII-Format, Berechnung eines digitalen Wortmodells des bzw. der Namen auf der Basis des entsprechenden ASCII-Textes durch Graphem-Phonem-Umsetzung, Speicherung des Wortmodells derart, daß die Zuordnung zum zugrundeliegenden ASCII-Text möglich ist, unter Verwendung einer Vorrichtung nach Anspruch 1,
**dadurch gekennzeichnet,**
**dass** das einem Namen zugeordnete Wortmodell (Phonemkette) aus einer Datenbank, in welcher Eigennamen entsprechenden Phoneme bzw- Phonemketten hinterlegt sind, ermittelt wird.

5. Verfahren nach Anspruch 4, **dadurch gekennzeichnet,**
**daß** das berechnete Wortmodell mit dem zugrundeliegenden ASCII-Text oder mit einem diesem zugeordneten Kode in einer weiteren Datenbank, vorzugsweise im Spracherkenner (7), abgelegt wird.

6. Verfahren nach Anspruch 4 oder 5, **dadurch gekennzeichnet,**
**daß** die ASCII-Entsprechung desjenigen ausgewählten Wortmodells, welches die größte Übereinstimmung zum eingegebenen Sprachsignal aufweist, auf einem Display (10) dargestellt wird oder das Wortmodell als synthetische Sprache mittels eines Lautsprechers (4) wiedergegeben wird und ein automatischer Verbindungsaufbau mit der Rufnummer, welche dem ausgewählten Wortmodell zugeordnet ist, erst nach Bestätigung des Erkennungsergebnisses automatisch ausgeführt wird.

## Claims

1. Device for speaker-independent voice-activated name dialling for telecommunications terminals, consisting of a memory (6) for phone numbers and names containing names as well as, in each case, the therewith associated phone number in the form of ASCII text; a grapheme-to-phoneme converter (8) for generating a digital word model (phoneme chain) from an ASCII text (grapheme chain); a phoneme-based speech recognizer (7) for comparing a spoken, digitized speech signal with predetermined digital word models whose ASCII equivalents are known and determining of that word model conforming most closely to the speech signal, the memory (6) being adapted for the alphanumeric entering of user-defined names and associated phone numbers, the grapheme-to-phoneme converter (8) generating from the entered name a corresponding digital word model which is stored together with the ASCII text or a thereto assigned code such that the speech recognizer (7) is able to access same, wherein, for automatic voice-activated name dialling, an acoustically entered name is relayed to the speech recognizer (7) in the form of a digital speech signal and is compared by the speech recognizer (7) with predetermined word models, wherein, for that word model conforming most closely to the speech signal, the speech recognizer (7) determines the corresponding ASCII text or thereto assigned code, this being used to retrieve the associated phone number from the memory (6), the speech and dialling apparatus (2) of the terminal automatically setting up a telecommunications connection to that phone number,
**characterized in that**
grapheme-to-phoneme conversion is supported by an exceptions dictionary containing sequences corresponding to phonetic peculiarities of proper names, said sequences being inserted into the phoneme chain by the grapheme-to-phoneme converter (8).

2. Device according to claim I, **characterized in that**
grapheme-to-phoneme conversion is supported by an onomastics database containing proper names in the form of ASCII text as well as in the form of digital word models.

3. Device according to claim 1 or 2, **characterized in that**
that digital word model found by the speech recognizer (7) to conform most closely to a name entered in the form of a speech signal is acoustically reproduced by means of a speech synthesizer (11) before automatic connection setup is initiated, automatic connection setup to the phone number associated with the recognized name not being executed until after confirmation of the result of recognition.

4. Process for setting up a personal phone number directory for speaker-independent voice-activated name dialling for telecommunications terminals, with alphanumeric entering of one or more names and associated phone numbers, storage of the entered data in ASCII format, calculation of a digital word model of the name(s) on the basis of the corresponding ASCII text by grapheme-to-phoneme conversion, storage of the word model such that association with the underlying ASCII text is possible, using a device according to claim 1,
**characterized in that**
the word model (phoneme chain) associated with a name is determined from a database containing phonemes / phoneme chains corresponding to proper names.

5. Process according to claim 4, **characterized in that**
the calculated word model is stored with the underlying ASCII text or with a thereto assigned code in a further database, preferably in the speech recognizer (7).

6. Process according to claim 4 or 5, **characterized in that**
the ASCII equivalent of that selected word model conforming most closely to the entered speech signal is displayed on a display (10) or the word model is reproduced in the form of synthetic speech by means of a loudspeaker (4) and an automatic connection setup is automatically executed to the phone number associated with the selected word model, but not until after confirmation of the result of recognition.

## Revendications

1. Dispositif de sélection de noms destiné aux terminaux de télécommunication, fonctionnant indépendamment de la personne qui les prononce et comportant une mémoire (6) des numéros d'appel et des noms, dans laquelle les noms, et les numéros d'appels qui y sont associés, sont enregistrés sous la forme d'un texte ASCII, un convertisseur graphème-phonème (8) permettant de générer un modèle de mot numérique (chaîne de phonèmes) à partir d'un texte ASCII (chaîne de graphèmes), un système de reconnaissance vocale (7) à base phonème permettant de comparer un signal vocal parlé et numérisé avec un modèle de mot numérique prédéterminé dont la correspondance ASCII est connue et de définir le modèle de mot qui présente la plus grande similarité avec le signal vocal, la mémoire (6) pouvant être remplie par les données alphanumériques des noms définis par l'utilisateur et les numéros d'appel correspondants, et le convertisseur graphème-phonème (8) générant un modèle de mot numérique correspondant au nom introduit, qui peut être mémorisé avec le texte ASCII ou un code lui étant assigné, de telle sorte que le système de reconnaissance vocale (7) peut y accéder, considérant que, pour sélectionner un nom automatiquement, un nom entré de manière acoustique est transmis au système de reconnaissance vocale (7) sous la forme d'un signal vocal numérique et comparé par le système de reconnaissance vocale à des modèles de mots prédéterminés, et que le système de reconnaissance vocale (7) assigne au modèle de mot qui présente la plus grande similitude avec le signal vocal le texte ASCII ou le code correspondant qui sert à appeler le numéro d'appel associé dans la mémoire (6), le dispositif d'appel et le dispositif de numérotation (2) du terminal établissant alors automatiquement la communication avec ce numéro d'appel,
**Caractérisé par** en ce que
la conversion graphème-phonème est assistée par un dictionnaire d'exceptions dans lequel sont stockées les séquences correspondantes aux caractéristiques phonétiques des noms propres, qui sont insérées par le convertisseur graphème-phonème (8) dans la chaîne de phonèmes.

2. Dispositif selon la revendication 1 **caractérisé en ce que**
la conversion graphème-phonème est assistée par une banque de données onomastique dans laquelle les noms propres sont enregistrés sous forme d'un texte ASCII et d'un modèle de mot numérique.

3. Dispositif selon la revendication 1 ou 2, **caractérisé en ce que**
le modèle de mot numérique, pour lequel le système de reconnaissance vocale (7) constate la plus grande similitude avec un nom entré comme signal vocal, est restitué de manière acoustique au moyen d'un synthétiseur de parole (11) avant que l'établissement automatique de la communication soit initialisé, la communication n'étant définitivement établie avec le numéro correspondant au nom identifié qu'après confirmation du résultat de la reconnaissance.

4. Procédé destiné aux terminaux de Deutsche Telekom, permettant d'établir un annuaire personnel des numéros d'appel pour sélectionner les nom dictés indépendamment de la personne qui les prononce, avec entrée alphanumérique d'un ou plusieurs noms et des numéros d'appel qui y sont associés, mémorisation des données introduites sous format ASCII, calcul d'un modèle de mot numérique du ou des noms sur la base du texte ASCII correspondant par la conversion graphème-phonème du modèle de mot, de manière à ce que l'assignation avec le texte ASCII qui en constitue l'origine soit possible, et utilisant un dispositif selon la revendication 1,
**caractérisé en ce que**
un modèle de mot (chaîne de phonèmes) attribué à un nom est déterminé à partir d'une banque de données dans laquelle sont enregistrés des phonèmes ou des chaînes de phonèmes correspondant aux noms propres.

5. Procédé selon la revendication 4 **caractérisé en ce que**
le modèle de mot calculé est enregistré avec le texte ASCII qui en constitue l'origine ou avec un code qui lui a été assigné dans une autre banque de données, de préférence dans le système de reconnaissance vocale (7).

6. Procédé selon la revendication 4 ou 5 **caractérisé en ce que**
la correspondance ASCII du modèle de mot sélectionné qui présente la plus grande similitude avec le signal vocal introduit est représenté sur un écran (10) ou que le modèle de mot est restitué sous la forme d'un langage synthétique par le biais d'un haut-parleur (4) et qu'un établissement automatique de la communication avec le numéro d'appel assigné au modèle de mot sélectionné, n'est exécuté automatiquement qu'après confirmation du résultat de la reconnaissance.
